**Europäisches Patentamt**

**European Patent Office**

**Office européen des brevets**

(19)

(11) **EP 1 282 180 A1**

(12) **EUROPEAN PATENT APPLICATION**

(43) Date of publication:
**05.02.2003 Bulletin 2003/06**

(51) Int Cl.[7]: **H01M 4/48**, C01B 13/36,
C01G 23/053

(21) Application number: **01810752.4**

(22) Date of filing: **31.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Xoliox SA**
**1025 Ecublens (CH)**

(72) Inventors:
• **Graetzel, Michael**
**1025 Saint Sulpice (CH)**

• **Kavan, Ladislav**
**CS-19000, Prague-9 CSSR (CZ)**
• **Sugnaux, Francois**
**1807 Blonay (CH)**

(74) Representative: **Ganguillet, Cyril et al**
**ABREMA**
**Agence Brevets & Marques**
**Ganguillet & Humphrey**
**Avenue du Théâtre 16**
**Case postale 2065**
**1002 Lausanne (CH)**

(54) **Process for producing Li4Ti5O12 and electrode materials**

(57)     Nanostructured $Li_4Ti_5O_{12}$ (spinel) was prepared *via* a method employing lithium ethoxide and Ti (IV) alkoxides as the starting reagents. The optimized materials contained less than 1% of anatase as the main impurity and, depending on the synthetic conditions, they exhibited the BET surface areas of 5-183 $m^2/g$. Trace amount of anatase in $Li_4Ti_5O_{12}$ was conveniently determined by cyclic voltammetry of Li-insertion. Thin-film electrodes from nanostructured $Li_4Ti_5O_{12}$ spinel exhibit excellent activity towards Li-insertion, even at charging rates as high as 250C. This behavior compares favorably with that of microcrystalline $Li_4Ti_5O_{12}$ made by conventional high-temperature solid-state synthesis. A use of this compound in lithium secondary batteries is also disclosed.

**FIG.2**

EP 1 282 180 A1

**Description**

The present invention concerns a process for producing a compound of formula $Li_4Ti_5O_{12}$. The invention concerns also a $Li_4Ti_5O_{12}$ material and more particularly an electrode material.

Spinel oxides $Li_{1+x}Ti_{2-x}O_4$; $0 \leq x \leq 1/3$ (space group Fd3m) were described in 1971 and electrochemically characterized in the early 1990s [1,2]. The end members of the series, i.e. $LiTi_2O_4$ and $Li_{4/3}Ti_{5/3}O_4$ ($Li_4Ti_5O_{12}$) are metallic (superconducting below 11 K) and semiconducting, respectively[3]. Both materials exhibit similar Li-insertion electrochemistry, the formal potential of Li-insertion being (1.36-1.338) V for $LiTi_2O_4$ and (1.55-1.562) V for $Li_4Ti_5O_{12}$, respectively [1,4].

In principle, therefore, this latter material can be coupled with a 4V electrode, as $LiMn_2O_4$ or $LiCoO_2$, to provide a cell with an operating voltage of approximately 2.5V, which is twice that of nikel-cadmium or nikel-metal hydride cells.

$Li_4Ti_5O_{12}$ accommodates Li with a theoretical capacity of 175 mAh/g (based on the mass of the starting host material) according to the equation:

$$(Li)^{8a}(Li_{1/3}, Ti_{5/3})^{16d}O_4^{32e} + e^- + Li^+ \leftrightarrow (Li_2)^{16c}(Li_{1/3}, Ti_{5/3})^{16d}O_4^{32e} \qquad (1)$$

where the superscripts stand for the number of equivalent sites with Wyckoff symbols for the space group Fd3m. Hence, $Li^+$ occupies tetrahedral (8a) and octahedral (16c, 16d) sites of the lattice, and the overall insertion capacity is controlled by the number of free octahedral sites. A more detailed analysis points at two-phase equilibrium, which explains the invariance of the electrode potential on the electrode composition. The spinel host structure accommodates $Li^+$ without significant changes of lattice constants. Consequently, these materials show excellent cycle-life 2 and the $Li^+$ diffusion coefficient of about $2.10^{-8}$ $cm^2/s$ was reported (Ref.[5]).

In all published communications [1,3-5] the spinel $Li_4Ti_5O_{12}$ was prepared by a solid-state reaction of stoichiometric amounts of $TiO_2$ and $Li_2CO_3$ or LiOH; the reaction typically occurs within 12-24 hours at 800-1000°C. This synthetic route gives, apparently, microcrystalline products, although the particle size was not systematically addressed in most cited works.

A $Li_4Ti_5O_{12}$ material with smaller particle size was prepared by high-energy ball milling of the conventional microcrystalline spinel [5]. The product exhibited particles around 600 nm in size, but its electrochemical performance was not significantly different from that of the non-milled starting material [5].

The above-mentioned $Li_4Ti_5O_{12}$ materials suffer from relatively low Li-insertion capacity at high charging rates. Therefore, there is a need for $Li_4Ti_5O_{12}$ electrode materials with improved electrochemical performance.

The inventors thought out that materials based on nano-sized particles, with particles typically in the range 1-10 nm may exhibit qualitatively different Li- insertion electrochemistry. To investigate such properties, an new synthetic method is required to grow nanocrystalline material. The conversion of nanocrystalline $TiO_2$ (anatase) towards $Li_4Ti_5O_{12}$ was first explored by a reaction of colloidal $TiO_2$ with LiOH. However, this strategy was not successful, neither its variants employing $Li_2CO_3$, $LiCH_3COO$ and $LiNO_3$ in combination with the stoichiometric amount of colloidal anatase in acidic or alkaline media at temperatures up to 250°C (in autoclave). In all cases, the product contained $Li_{1+x}Ti_{2-x}O_4$ with considerable amounts of unreacted anatase.

The inventors solved the problem by developing a method comprising a step of mixing an organo-lithium compound selected from lithium alcoholates with an organo-titanium compound selected from titanic acid esters in an organic solvent and a step of hydrolizing said mixture.

Particularly preferred alkoxides as starting reagents are Li-ethoxide and Ti(IV) isopropoxide and Ti(IV) n butoxide.

Preferably, the organo-lithium compound and the organo-titanium compound are mixed in a stoichiometric molar ratio substantially equal to 4:5. For some contemplated applications, defined mixtures of anatase and lithium titanate spinel are desirable. These may be obtained by appropriate ratios differing from the above molar ratio.

After hydrolysis, isolation and drying of the precipitate, spinel products were obtained, which, according to the nitrogen absorption surface area measurement method of Brunauer-Emmet-Teller (BET method) exhibit BET surface area values of at least 5 $m^2/g$, and generally above 10 $m^2/g$, which is 3 times more than the BET surface area values of microcrystalline $Li_4Ti_5O_{12}$ materials.

However, after alkoxide hydrolysis, the slurry still contains appreciable amounts of unreacted anatase.

Therefore, a preferred embodiment of the process according to the invention further comprises the steps of processing the hydrolysed mixture with a polymer like PEG, up to homogeneity, and submitting the homogenized product to a heat treatment effective for removing organic material therefrom.

This polymer is known to form complexes with lithium and oxo-titanium species, while it may also organize the inorganic structure by supramolecular templating[7].

After processing the hydrolized mixture with PEG and removing the same by annealing, spinel materials with an anatase content of less than 1% could be obtained. Materials exhibiting unexpected extremely high BET surface area values of more than 80 $m^2$/g may be obtained.

The corresponding porosity is mostly observed in the mesoporous range. The term mesoporous refers to pore sizes from 2 nm to 50 nm.

Another object of the invention is an electrode comprising a nano-structured $Li_4Ti_5O_{12}$ material exhibiting BET values as above. The PEG processing step and the annealing/sintering step may be conducted so as to obtain BET values between 20 $m^2$/g and 80 $m^2$/g, which are well suitable for electrodes.

A preferred object of the invention is a thin film electrode obtained by coating a conductive support with a hydrolized mixture produced by a process as defined above and submitting said coated support to a heat treatment. A particularly preferred thin film electrode is obtained by coating a conductive support with the homogenized product produced by processing the hydrolized mixture with PEG, and submitting said coated support to an annealing treatment.

Such annealing treatments may be carried out at 400-500°C, that is to say at much lower temperatures than the solid state spinel preparations of the prior art.

Other features and advantages of the process and products according to the invention will appear to those skilled in the art from the following description of a preferred embodiment, in relation with the drawings, wherein

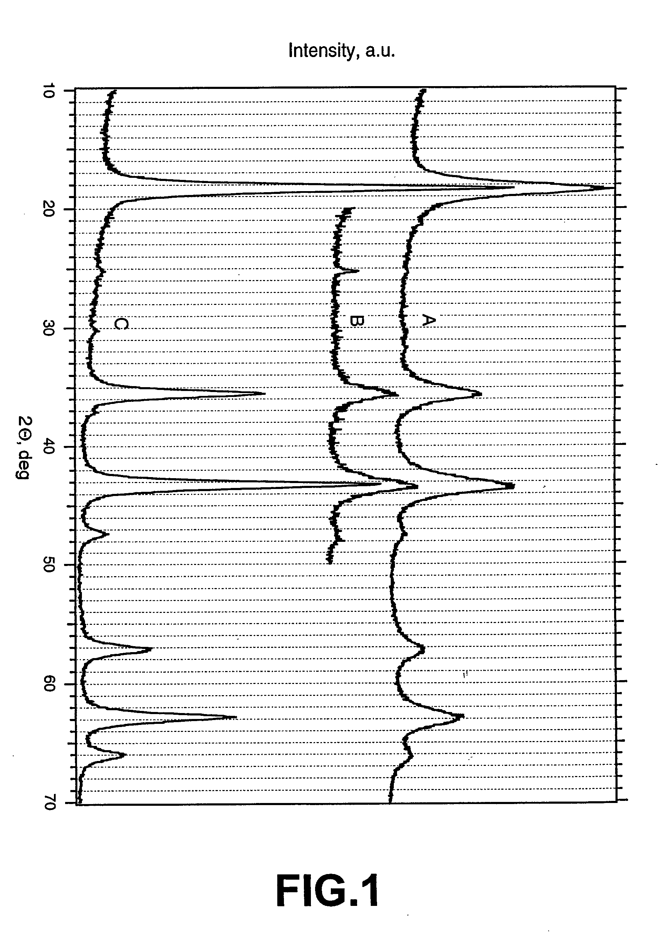

Figure 1 shows a powder extract X-ray diffractogram of $Li_4Ti_5O_{12}$ prepared from Ti(IV) butoxide + Li ethoxide; (A) Material synthesized by the procedure using PEG (BET surface area 183 $m^2$/g); (B) Material prepared as in (A) except the addition of PEG was omitted; (C) Material prepared as in (A) but with the aid of hydrothermal growth of particles (150°C, 10 hours, BET surface area, 119 $m^2$/g). The curves are offset for clarity, but the intensity scale is identical for all three plots.

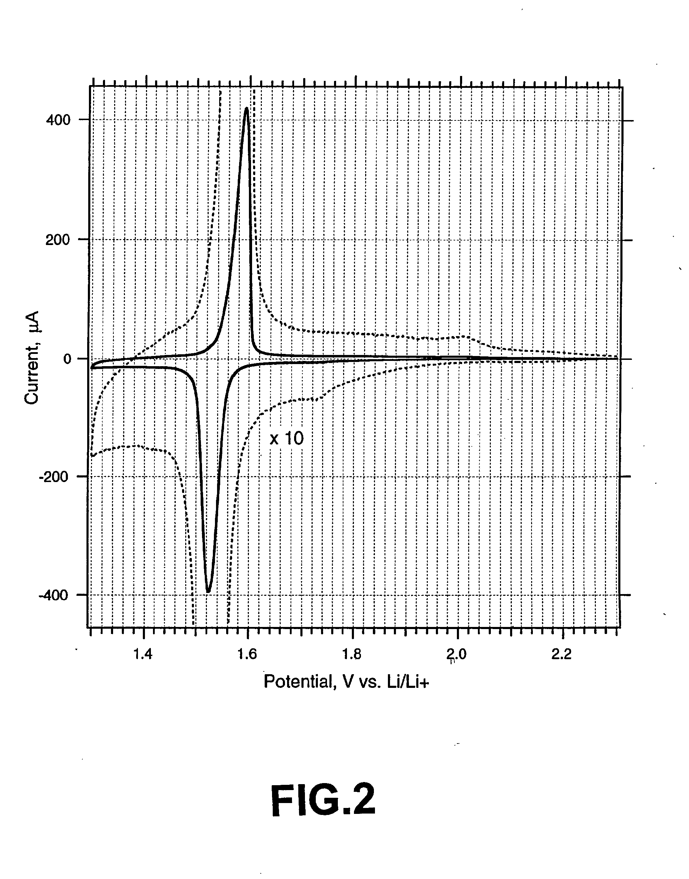

Figure 2 shows cyclic voltammogram of $Li_4Ti_5O_{12}$ prepared from Ti(IV) butoxide-Li ethoxide. Electrolyte solution: 1 M $LiN(CF_3SO_2)_2$ + EC/DME (1:1 by mass); scan rate 0.2 mV/s. Dashed curve displays the same plot, but with the current-scale expanded by a factor of 10.

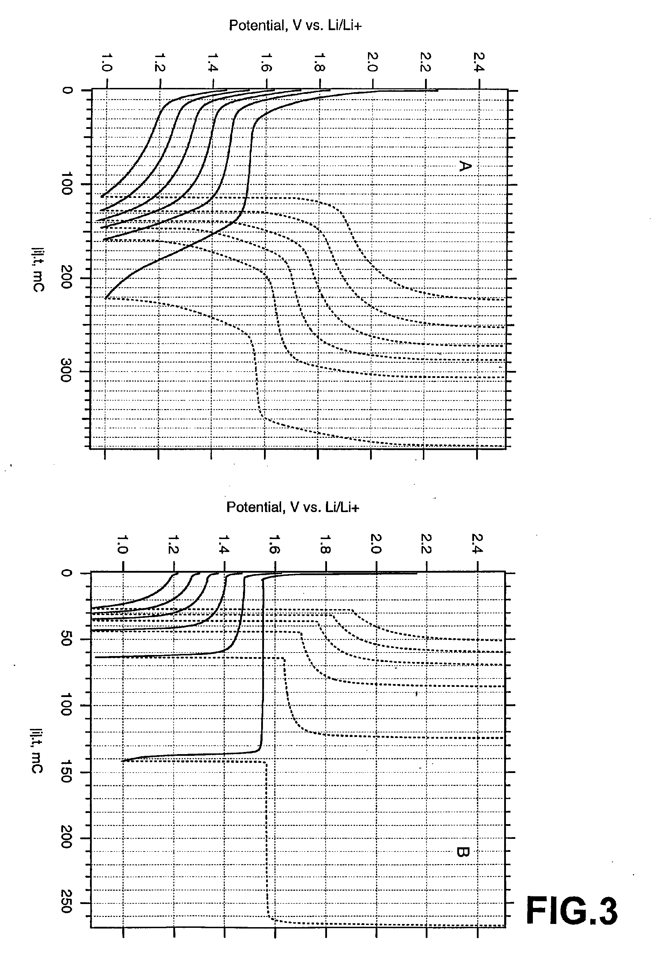

Figure 3 shows a chronopotentiometric plot of (A) $Li_4Ti_5O_{12}$ prepared from Ti(IV) butoxide-Li ethoxide compared to (B) commercial $Li_4Ti_5O_{12}$ spinel (LT-2 from Titan Kogyo Japan). Electrolyte solution: 1 M $LiN(CF_3SO_2)_2$ + EC/DME (1:1 by mass). The current, i was adjusted to charging rate of 2C, 50C, 100C, 150C, 200C and 250C for solid curves from top to bottom. Dashed curves display the corresponding galvanostatic discharging at the same rates. For the sake of clarity, the time (t) is multiplied by the absolute value of charging/discharging current, i.

Under Ar-atmosphere, 1.4 g (0.2 mol) of lithium metal (Aldrich) was dissolved in 110 ml of absolute ethanol and mixed with 71 g (0.25 mol) of titanium (IV) isopropoxide (*pract*. Fluka) or, alternatively, with 85 g (0.25 mol) of titanium (IV) n-butoxide (*pract*. Fluka). Still another alternative consisted in using 1-M ethanolic solution of lithium ethoxide (*pract*. Fluka) instead of dissolving Li in ethanol. (The Li-ethoxide from Fluka exhibited abnormal organic smell and dark-brown coloration, but the spinel synthesis was not markedly disturbed by these impurities). 50 mL of the solution of Li + Ti alkoxides was hydrolyzed in 300 mL of water, and the produced slurry was concentrated on rotary evaporator (40°C, 20 mbar) to a concentration of 10-20 wt%. Polyethylene glycol (molecular weight 20 000, Merck) was added in the proportion of 50-100 % of the weight of $Li_4Ti_5O_{12}$, and the mixture was stirred overnight. The resulting viscous liquid was deposited on a sheet of conducting glass (F-doped $SnO_2$, TEC 8 from Libbey-Owens-Ford, 8 $\Omega$/square) using a doctor-blading technique [6,7] and finally annealed at 500°C for 30 min. Sometimes, the slurry was homogenized using a titanium ultrasonic horn (Bioblock Scientific; 80 W, 30 x 2s pulses) before deposition. The mass of active electrode material was typically 0.1-0.3 mg/$cm^2$; the projected electrode area 1 $cm^2$ and the layer thickness about 2-6 μm. For comparison, an analogous electrode was prepared from commercial $Li_4Ti_5O_{12}$ (LT-2 from Titan Kogyo Japan). The material had a BET surface of 2.9 $m^2$/g (manufacturer's specification; 3.1 $m^2$/g by own measurement). The LT-2 powder was dispersed by mortaring with acetylacetone, and the paste for doctor-blading was prepared by addition of hydroxypropylcelulose and Triton X-100 as described by L. Kavan et al[7].

The BET surface areas of the prepared materials were determined from nitrogen adsorption isotherms at 77 K (ASAP 2010, Micromeritics). The film thickness was measured with an Alpha-step profilometer (Tencor Instruments). Powder X-ray diffractometry (XRD) was studied on a Siemens D-5000 difractometer using CuKα radiation. The samples for BET and XRD were obtained by mechanical scraping of the film from a glass support.

The BET surface areas of the as-prepared materials were 105 $m^2$/g (synthesis employing Ti(IV) isopropoxide) and 183 $m^2$/g (synthesis employing Ti(IV) butoxide), respectively. If the slurry was autoclaved at 150°C for 10 hours, the surface areas decreased to 53 $m^2$/g (isopropoxide-synthesis) or 119 $m^2$/g (butoxide-synthesis), which is due to hydrothermal particle growth by Ostwald ripening.

Fig 1/(A) shows the X-ray diffractogram of a material resulting from the butoxide-synthesis (surface area 183 $m^2$/g). All peaks can be indexed as $Li_4Ti_5O_{12}$. The crystal size ($d_c$) can be estimated from the X-ray line width (w) (Scherrer formula):

$$d_c = 0.9\lambda/w\cos\Theta \tag{2}$$

($\lambda$ is the X-ray wavelength (0.1540562 nm) and $\Theta$ is the diffraction angle). Eq. (2) gives $d_c$ about 4-5 nm. This value roughly matches the particle size ($d_p$) estimated from BET area (S=183 $m^2$/g). Assuming spherical particles, the value of $d_p$ can be approximated as:

$$d_p = 6/S\rho \tag{3}$$

which gives $d_p \approx 9$ nm for S=183 $m^2$/g and p = 3.5 $g/cm^3$. Analogous evaluation routine for the *ex*-propoxide material produces $d_c \approx 15$ nm and $d_p \approx 19$ nm. Fig. 1/(B) shows the XRD plot for a material prepared as that in Fig. 1/(A) except that the addition of polyethylene glycol was omitted. In this case, anatase is clearly distinguished at $2\Theta \approx 25$ deg. Fig 1/(C) displays the XRD plot for a material prepared as that in Fig. 1/(A), but the particles were grown hydrothermally (the product's surface area was 119 $m^2$/g, $d_c \approx d_p \approx 14$ nm). The lattice constant of the hydrothermally grown material (Fig. 1/(C)) equals 0.8366 nm, which is in good agreement with the lattice constant of $Li_4Ti_5O_{12}$ made by the conventional high-temperature synthesis: 0.8367 (Ref.[1]), 0.8365 (Ref.[2]) and 0.8358 (Ref.[3]). However, the lattice constant of the nanocrystalline materials (without hydrothermal growth, cf. Fig. 1/(A)) is significantly smaller. The actual values fluctuate between 0.8297 nm to 0.8340 nm for various samples, both from the butoxide- and isopropoxide-synthesis.

Whereas the lattice constant, *a*, of a $Li_{1+x}Ti_{2-x}O_{12}$ spinel is known to decrease with x (ref.3) according to the relation:

$$a = 0.8405 - 0.0143x \tag{4}$$

, this reasoning cannot account for the observed decrease of a for the nanocrystalline material according to the invention. The latter conclusion is supported by two arguments: (i) the lattice constant attains its "normal" value after hydrothermal growth and (ii) the nanocrystalline material according to the invention shows the electrochemistry of a Li-rich spinel, *vide infra.* It may be noticed that a 5 nm-sized particle of Li4Ti5O12 contains about 200 unit cells only, and such a small particle exhibits marked lattice-shrinking.

Electrochemical measurements were carried out in a one-compartment cell using an Autolab Pgstat-20 controlled by GPES-4 software. The reference and auxiliary electrodes were from Li metal, hence potentials are referred to the Li/$Li^+$ (1M) reference electrode. $LiN(CF_3SO_2)_2$ (Fluorad HQ 115 from 3M) was dried at 130°C/1 mPa. Ethylene carbonate (EC) and 1,2-dimethoxyethane (DME) were dried over the 4A molecular sieve (Union Carbide). The electrolyte solution,I M $LiN(CF_3SO_2)_2$ + EC/DME (1/1 by mass) contained 10-15 ppm $H_2O$ as determined by Karl Fischer titration (Metrohm 684 coulometer). All operations were carried out in a glove box.

Cyclic voltammogram of the ex-butoxide material (A) evidences the Li-insertion into $Li_4Ti_5O_{12}$ spinel (Fig. 2). The formal potential of insertion equals 1.56 V vs. Li/$Li^+$, which matches the potential of ordinary microcrystalline $Li_4Ti_5O_{12}$ [1,4]. The small peaks at 1.75 and 2.0 V can be assigned to anatase [6,7]. Assuming the insertion ratio $Li/TiO_2$ (anatase) = 0.5 [6,7], the integral peak area corresponds to the anatase content below 1 %. In most samples, the anatase content was between 0.3 - 0.6 %, and, sometimes, it was even not detectable. Note that the Li-insertion electrochemistry can serve as a very sensitive analytical method for the $Li_4Ti_5O_{12}$ - $TiO_2$ mixture, which is superior to XRD (cf. Fig. 1/(A) and Fig 2).

Fig. 3A displays a series of galvanostatic charging/discharging cycles of the same nanocrystalline electrode as in Fig. 2 at relatively very high charging rates: 2C, 50C, 100C, 150C, 200C and 250C. The maximum reversible Li-insertion capacity is 160 mC, and about 70% of this charge can still be cycled at 250C with the same cut-off voltage. The commerical microcrystalline $Li_4Ti_5O_{12}$ shows only ca 19 % of its nominal capacity in the 250C-cycle (Fig. 3B). Fast charging is always reversible, but the nanocrystalline electrode shows considerable irreversibility at 2C. This is apparently due to breakdown processes in the electrolyte solution, such as reduction of trace water, which is more pronounced at high-surface area electrodes. Within the experimental error of weighing of the electroactive film, the microcrystalline (LT-2) electrode gives the theoretical maximum insertion capacity (Eq 1), i.e. 630 C/g. The nanocrystalline electrodes usually showed capacities of ca. 550-610 C/g.

The efficient Li-insertion was observed for all thin-layer electrodes prepared by the sol-gel method according to the invention, i.e. no marked differences were traced between materials having surface areas from 53 to 183 $m^2$/g. In other words, the charging rate does not seem to be limited by particle-sizes, if they are below certain limit, which is not smaller that ca. 30 nm. This is apparently due to the fast diffusion of $Li^+$ inside the spinel lattice. The solid-state Li-transport becomes rate-limiting only for micrometer-sized particles (LT-2) at the same conditions.

It can apparently be excluded that the slow response of LT-2 is due to poor electrical contacts. In thin-film electrodes, virtually every microcrystal of LT-2 is in a direct contact with the current collector. On the other hand, the charge transport in nanocrystalline film occurs via percolation among many necking particles of $Li_4Ti_5O_{12}$, which have almost infinite electrical resistivity in the starting (non-lithiated) state.

Thereby, the excellent electrochemical performance of nanocrystalline $Li_4Ti_5O_{12}$ is clearly demonstrated. Such a performance finds a straightforward application in development of advanced Li-ion batteries.

Thus, the invention provides electroactive ion-intercalation materials based on nanostructured lithium titanate spinel allowing extremely high charge and discharge rates, a high number of charge-discharge cycles, mesoporous electrode materials thereof and processes to produce these materials, including precipitation from a solution, doping with metallic atoms, nano-templating, microparticle agglomeration, spray-drying, ball-milling and sintering.

This invention also provides electrodes, i.e. anode or cathode, based on nanostructured lithium titanate spinel, and their manufacturing process to build these as rigid films made from nanoparticles of the electroactive material or as flexible layers made from mesoporous microparticles of the electroactive nanostructured material. Such microparticles may be obtained from agglomerated and sintered lithium titanate spinel precipitated particles, which are spray dried, processed with an organic binder and coated onto a conductive substrate.

References

1. K. M. Colbow, J. R. Dahn and R. R. Haering, *J. Power Sources,* **26,** 397 (1989).
2. T. Ohzuku, A. Ueda and N. Yamamoto, *J. Electrochem. Soc.*, **142,** 1431 (1995).
3. M. R. Harrison, P. P. Edwards and J. B. Goodenough, *Phil. Mag. B*, **52,** 679 (1985).
4. S. I. Pyun, S. W. Kim and H. C. Shin, *J. Power Sources,* **81-82,** 248 (1999).
5. K. Zaghib, M. Simoneau, M. Armand and M. Gauthier, *J. Power Sources*, **81-82,** 300 (1999).
6. L. Kavan, M. Grätzel, J. Rathousky and A. Zukal, *J. Electrochem. Soc.,* **143,** 394 (1996).
7. L. Kavan, J. Rathousky, M. Grätzel, V. Shklover and A. Zukal, *J. Phys. Chem. B*, **104,** 12012 (2000).

**Claims**

1. A process for producing a spinel compound of formula $Li_4Ti_5O_{12}$, comprising a step of preparing a mixture of an organo-lithium compound selected from lithium alcoholates with an organo-titanium compound selected from titanic acid esters, in a liquid medium, and a step of hydrolyzing the mixture of said compounds.

2. A process as claimed in claim 1, **characterized in that** said organo-lithium compound is Li-ethoxide and said organo-titanium compound is selected from Ti(IV) isopropoxide and Ti(IV) n-butoxide.

3. A process as claimed in claim 1 or 2, **characterized in that** said organo-lithium compound and said organo-titanium compound are mixed in a molar ratio of substantially 4:5.

4. A process as claimed in any one of claims 1-3, **characterized in that** it further comprises a step of processing the hydrolized mixture with a polymer, in particular polyethylen-glycol (PEG), up to homogeneity and a step of submitting the homogenized product to a heat treatment effective for removing organic material therefrom.

5. A process as claimed in claim 4, further comprising a hydrothermal growth step.

6. A $Li_4Ti_5O_{12}$ spinel material with a BET surface area of at least 5 $m^2/g$, in particles of more than 10 $m^2/g$.

7. A $Li_4Ti_5O_{12}$ spinel material as claimed in claim 6, with a BET surface area of more than 80 $m^2/g$.

8. An electrode comprising a $Li_4Ti_5O_{12}$ spinel material as claimed in claim 6 or 7.

9. An electrode comprising a $Li_4Ti_5O_{12}$ spinel material with a BET surface area of between 20 and 80 $m^2/g$.

10. An electrode comprising a $Li_4Ti_5O_{12}$ spinel material exhibiting a charging and/or discharging rate higher than 20C.

11. A thin film electrode obtained by coating a conductive support with a hydrolized mixture produced by a process as claimed in anyone of claims 1-3 and submitting said coated support to a heat treatment.

12. A thin film electrode obtained by coating a conductive support with a homogenized product produced according to claim 4, and submitting said coated support to an annealing treatment.

Intensity, a.u.

FIG.1

**FIG.2**

FIG.3

## EUROPEAN SEARCH REPORT

European Patent
Office

**Application Number**

EP 01 81 0752

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JP 2000 302547 A (TOHO TITANIUM CO LTD) 31 October 2000 (2000-10-31) | 1-12 | H01M4/48 C01B13/36 C01G23/053 |
| A | & US 2001/031401 A1 (T. YAMAWAKI ET AL.) 18 October 2001 (2001-10-18) * claims 1-14 * | 1-12 | |
| A | COLBOW K M ET AL: "STRUCTURE AND ELECTROCHEMISTRY OF THE SPINEL OXIDES LITI204 AND LI4/3TI5/304" JOURNAL OF POWER SOURCES, ELSEVIER SEQUOIA S.A. LAUSANNE, CH, vol. 26, no. 3 / 4, 16 May 1989 (1989-05-16), pages 397-402, XP000235193 ISSN: 0378-7753 * page 398, line 1 - line 20 * | 1-12 | |
| A | DE 44 47 578 A (ZENTRUM FUER SONNENENERGIE UND) 4 April 1996 (1996-04-04) * claims 1-12 * | 1-12 | |
| A | US 5 766 796 A (ABRAHAM KUZHIKALAIL M ET AL) 16 June 1998 (1998-06-16) * claims 1-7 * | 1-12 | **TECHNICAL FIELDS SEARCHED (Int.Cl.7)** H01M C01B C01G |
| A | EP 0 827 231 A (MATSUSHITA ELECTRIC IND CO LTD) 4 March 1998 (1998-03-04) * page 4, line 40 - line 50; claims 1,8 * | 1-12 | |

The present search report has been drawn up for all claims

| Place of search | Date of completion of the search | Examiner |
|---|---|---|
| THE HAGUE | 20 December 2001 | Battistig, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

EP 1 282 180 A1

## ANNEX TO THE EUROPEAN SEARCH REPORT
## ON EUROPEAN PATENT APPLICATION NO.

EP 01 81 0752

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2001

| Patent document cited in search report | | | Publication date | Patent family member(s) | | | Publication date |
|---|---|---|---|---|---|---|---|
| JP 2000302547 | A | | 31-10-2000 | US | 2001031401 | A1 | 18-10-2001 |
| DE 4447578 | A | | 04-04-1996 | DE | 4435117 | C1 | 15-05-1996 |
| | | | | DE | 4447578 | A1 | 04-04-1996 |
| | | | | AT | 181715 | T | 15-07-1999 |
| | | | | DE | 59506316 | D1 | 05-08-1999 |
| | | | | WO | 9610538 | A1 | 11-04-1996 |
| | | | | EP | 0783459 | A1 | 16-07-1997 |
| | | | | JP | 10509683 | T | 22-09-1998 |
| | | | | US | 6080510 | A | 27-06-2000 |
| US 5766796 | A | | 16-06-1998 | NONE | | | |
| EP 0827231 | A | | 04-03-1998 | JP | 10069922 | A | 10-03-1998 |
| | | | | CN | 1175099 | A | 04-03-1998 |
| | | | | EP | 0827231 | A2 | 04-03-1998 |
| | | | | US | 6274271 | B1 | 14-08-2001 |

EPO FORM P0459

For more details about this annex : see Official Journal of the European Patent Office, No. 12/82

11